# EUROPÄISCHE PATENTSCHRIFT

(11) **EP 2 340 319 B1**
(45) Veröffentlichungstag und Bekanntmachung des Hinweises auf die Patenterteilung: **29.06.2016**
(21) Anmeldenummer: 09782706.7
(22) Anmeldetag: 07.09.2009
(51) Int. Cl.: C23C 22/36, B05D 7/00, C09D 5/08

(54) **LACKHAFTUNG DURCH POLYVINYLAMINE IN SAUREN WÄSSRIGEN POLYMERHALTIGEN KORROSIONSSCHUTZMITTELN**
PAINT ADHESION BY POLYVINYL AMINES IN ACIDIC AQUEOUS CORROSION PROTECTION PRODUCT CONTAINING POLYMERS
ADHÉSION DE LAQUE PAR DES POLYVINYLAMINES DANS DES AGENTS ANTICORROSION ACIDES AQUEUX CONTENANT DES POLYMÈRES

(30) Priorität: 28.10.2008 DE 102008053517
(43) Veröffentlichungstag der Anmeldung: 06.07.2011
(73) Patentinhaber: Henkel AG & Co. KGaA, 40589 Düsseldorf (DE)
(72) Erfinder: SCHMIDT, Andreas, 74226 Nordheim (DE); DE ZEEUW, Ard, 40627 Düsseldorf (DE)
(86) Internationale Anmeldenummer: PCT/EP2009/061567
(87) Internationale Veröffentlichungsnummer: WO 2010/049198

(56) Entgegenhaltungen:
- EP-A1- 0 672 467
- EP-A1- 1 433 876
- WO-A1-2007/100017
- WO-A1-2008/022819

## Beschreibung

Die vorliegende Erfindung betrifft ein wässriges, chromfreies und härtbares Korrosionsschutzmittel für die Erstbeschichtung von Metalloberflächen enthaltend zur Verbesserung der Hafteigenschaften der ausgehärteten Erstbeschichtung zur Metalloberfläche und zu weiteren organischen Beschichtungen mindestens ein organisches Polymer von zumindest teilweise acylierten Vinylaminen. Zusätzlich betrifft die Erfindung ein Verfahren zur Herstellung einer Erstbeschichtung mit dem erfindungsgemäßen Mittel, sowie zur Aufbringung weiterer organischer Beschichtungen, insbesondere solcher auf Basis von Polyurethanharzen und/oder auf Basis von Isocyanaten und Diolen oder Polyolen, und ein derart hergestelltes Metallband oder hieraus abgeteiltes Metallblech, das gegebenenfalls umgeformt sein kann.

Aus dem Stand der Technik ist eine Vielzahl härtbarer chromfreier Erstbeschichtungsmittel bekannt, die für die Ausbildung einer wenige Mikrometer dünnen Korrosionsschutzbeschichtung auf metallischen Oberflächen geeignet sind. Derartige Erstbeschichtungsmittel stellen üblicherweise saure wässrige Lösungen dar, die eine anorganische Konversion der Metalloberfläche und eine Bedeckung mit einem organischen Bindemittel bewirken, welches nach dem in Kontakt bringen mit dem Erstbeschichtungsmittel ausgehärtet wird. In einem solchen Verfahren werden dünne anorganisch/organische Hybridbeschichtungen enthalten, die bereits einen beträchtlichen Schutz vor Korrosion bieten.

So lehrt die deutsche Offenlegungsschrift DE 10 2006 039 633 ein wässriges härtbares Korrosionsschutzmittel zur Erstbeschichtung von metallischen Substraten, das einen pH-Wert im Bereich von 1 bis 3 aufweist, enthaltend Wasser und
a) Fluorokomplexionen von Titan und/oder Zirkon,
b) mindestens ein Korrosionsschutzpigment,
c) mindestens ein im genannten pH-Bereich wasserlösliches oder wasserdispergierbares organisches Polymer, das als solches in wässriger Lösung bei einer Konzentration von 50 Gew.-% einen pH-Wert im Bereich von 1 bis 3 aufweist.

Ein solches Korrosionsschutzmittel kann gemäß der Offenbarung der DE 10 2006 039 633 im auf Metallband ausgehärteten Zustand bereits als vollwertige vor Korrosion schützende Beschichtung eingesetzt werden. Dennoch ist auch eine weitere Beschichtung mit einem härtbaren organischen Bindemittelsystem, also das Aufbringen weiterer Lacksysteme, für eine optimale Barrierewirkung gegenüber korrosiven Medien und auch für die Bereitstellung gewünschter mechanischer und optischer Eigenschaften des beschichteten Metallbandes notwendig. Eine optionale Zweitbeschichtung wird auch in der DE 10 2006 039 633 erwähnt, allerdings sind die Haftungseigenschaften zu üblichen Decklacken nicht optimal, so dass die Zweitbeschichtung leicht unterwandert werden kann und in ihrer Funktionalität beeinträchtigt wird.

Die Aufgabe der vorliegenden Erfindung besteht demnach darin, die Haftung von organischen Decklacksystemen auf metallischen Oberflächen, insbesondere auf Oberflächen von Zink und Zinklegierungen, durch härtbare korrosionsschützende, aber chromfreie Erstbeschichtungsmittel enthaltend ein organisches Bindemittel zu verbessern und eine hinreichende Haftung zu Lacksystemen, insbesondere zu Lacksystemen auf Basis von Polyurethanharzen herzustellen.

Wenn hier von einer "Erstbeschichtung" die Rede ist, so bedeutet dies, dass das metallische Substrat vor dem Kontakt mit dem erfindungsgemäßen Korrosionsschutzmittel keiner weiteren Korrosionsschutzbehandlung unterzogen wurde. Vielmehr soll das erfindungsgemäße Korrosionsschutzmittel auf eine frisch erzeugte oder frisch gereinigte Metalloberfläche aufgetragen werden. Diese Behandlung stellt die erste Korrosionsschutzmaßnahme für das metallische Substrat dar. Dabei ist es durchaus erwünscht, auf das metallische Substrat nach dem Auftrag des erfindungsgemäßen Korrosionsschutzmittels weitere dekorative und/oder korrosionsschützende Beschichtungen wie beispielsweise übliche Tauch-, Spritz- oder Pulverlacke aufzubringen.

Die EP 0 672 467 lehrt eine Zwischenspülung mit einer Lösung von acylierten Polyvinylaminen für phosphatierte Metalloberflächen, bevor eine Elektrotauchlackierung folgt, um die Haftung des Tauchlackes auf der phosphatierten Metalloberfläche zu verbessern. Die Anwendung von acylierten Polyvinylaminen in chromfreien wässrigen Korrosionsschutzmitteln enthaltend ein organisches Bindemittel für die Erstbeschichtung wird dabei nicht erwähnt, ebenso wenig die Eignung acylierter Polyvinylamine als Haftvermittler für spezifische organische Bindemittelsysteme.

Die EP 1433876 A1 offenbart die Verwendung von Polyvinylaminen, die teilweise acetyliert vorliegen können, in Zusammensetzungen zur Konversionsschichtbildung auf Metallen, die auf Fluorokomplexen der Elemente Zr und Ti basieren.

Überraschenderweise wird die der Erfindung zugrunde liegende Aufgabe von einem chromfreien, härtbaren Korrosionsschutzmittel zur Erstbeschichtung von metallischen Substraten gelöst, das einen pH-Wert im Bereich von 1 bis 3 aufweist, enthaltend Wasser und
a) Fluorokomplexionen von Titan und/oder Zirkon,
b) mindestens ein Korrosionsschutzpigment,
c) mindestens ein im genannten pH-Bereich wasserlösliches oder wasserdispergierbares organisches Polymer, das als solches in wässriger Lösung bei einer Konzentration von 50 Gew.-% einen pH-Wert im Bereich von 1 bis 3 aufweist, wobei das Mittel zusätzlich
d) mindestens ein Polyvinylamin mit einem Molekulargewicht größer als 100.000 g/mol, aber nicht größer als 1.000.000 g/mol enthält, wobei der Acylierungsgrad der Polyvinylamine in Form formylierter und acetylierter Amino-Gruppen nicht kleiner als 80 % ist.

Überraschenderweise wird bei Anwesenheit von Polyvinylaminen gemäß Komponente d) in einem im Stand der Technik bekannten sauren Erstbeschichtungsmittel enthaltend die Komponenten a)-c) sowohl die Haftung des ausgehärteten Erstbeschichtungsmittel zum metallischen Substrat als auch die Haftung eines organischen Decklackes zur ausgehärteten Erstbeschichtung deutlich erhöht. Dabei zeigt sich, dass die Anwesenheit formylierter und acetylierter Amino-Gruppen im organischen Polymer die Haftung der ausgehärteten Erstbeschichtung zum Substrat positiv beeinflusst.

Wegen der leichteren Zugänglichkeit und der höheren Effizienz für die Erhöhung der Lackhaftung sind Polyvinylamine enthalten, deren Amino-Gruppen vorzugsweise zumindest teilweise formyliert vorliegen. Polyvinylamine mit einem Acylierungsgrad in Form formylierter und acetylierter Amino-Gruppen von nicht kleiner 90 % sind als Komponente d) bevorzugt.

Erfahrungsgemäß zeigt sich darüber hinaus, dass optimale Ergebnisse hinsichtlich der Lackhaftung dann erzielt werden, wenn das Molekulargewicht der Polyvinylamine der Komponente d) größer als 100.000, aber nicht größer als 1.000.000 g/mol, bevorzugt nicht größer als 500.000 g/mol ist.

Entsprechend ist für die der Erfindung zugrunde liegenden Aufgabe ein formyliertes Polyvinylamin mit einem Molekulargewicht von größer als 100.000 g/mol, aber nicht größer als 500.000 g/mol, und einem Acylierungsgrad von nicht kleiner als 90 % am besten geeignet und daher insbesondere bevorzugt.

Im Folgenden werden spezifische Ausgestaltungen der Komponenten a-c) der erfindungsgemäßen härtbaren Korrosionsschutzmittels angegeben und näher erläutert.

Die Fluorokomplexionen von Titan und/oder Zirkon gemäß Komponente a) des erfindungsgemäßen Mittels stellen vorzugsweise Hexafluoro-komplexionen dar. Diese kann man in Form der freien Säuren oder in Form ihrer im Korrosionsschutzmittel löslichen Salze einführen. Zur Einstellung des sauren pH-Werts ist es günstig, die Fluorokomplexionen als Hexafluorosäuren einzubringen. Die Fluorokomplexionen können auch im Mittel weniger als 6 Fluoratome pro Komplexmolekül aufweisen. Dies lässt sich beispielsweise dadurch erreichen, dass man zusätzlich zu Hexafluorokomplexionen weitere Verbindungen oder Salze mit Titan- und/oder Zirkonionen einsetzt, die im Stande sind, Fluorokomplexe zu bilden. Beispielsweise seien Oxidcarbonate oder Hydroxycarbonate genannt. Andererseits kann das Korrosionsschutzmittel einen über das Vorliegen von Hexafluoro-komplexionen hinausgehenden Überschuss an freien Fluoridionen aufweisen, die beispielsweise in Form von Flusssäure eingebracht werden können.

Das Korrosionsschutzpigment b) ist vorzugsweise eine partikelförmige organische oder anorganische Verbindung, die durch Diffusionshemmung ("Barrierepigment") die Diffusion von Wasser und/oder anderen korrosiven Agentien durch die Beschichtung hemmt oder die antikorrosiv wirkende Moleküle oder Ionen abgeben kann. Vorzugsweise wird als Korrosionsschutzpigment eine Verbindung mit Kationenaustauscher-Eigenschaften verwendet. Besonders bevorzugt ist eine Verbindung, die durch Alkalimetallionen austauschbare Kationen 2- oder mehrwertiger Metalle enthält. Bevorzugte austauschbare Kationen sind die Kationen von Ca, Ce, Zn, Sr, La, Y, Al und Mg. Insbesondere sind Korrosionsschutzpigmente auf Basis von Silicaten mit Schicht- oder Raumnetzstruktur bevorzugt, die derartige austauschfähige Kationen enthalten. Beispielsweise kann das Korrosionsschutzpigment eine synthetische, amorphe Kieselsäure darstellen, die zumindest teilweise in Form ihres Salzes mit austauschfähigen Calciumionen vorliegt. Um mit der weiter unten genannten angestrebten Schichtdicke des ausgehärteten Korrosionsschutzmittels zu korrespondieren, liegt die mittlere Teilchengröße des Korrosionsschutzpigments (D50-Wert, beispielsweise bestimmbar durch Lichtstreumethoden) im Bereich von 0,5 bis 10 µm, insbesondere im Bereich von 1 bis 4 µm.

Das als Komponente c) auszuwählende organische Polymer hat die intrinsische Eigenschaft, in wässriger Lösung bei einer Konzentration von etwa 50 Gew.-% einen pH-Wert im Bereich von 1 bis 3, vorzugsweise im Bereich von 1,5 bis 2,5 und insbesondere im Bereich von 1,8 bis 2,2 aufzuweisen. Hierzu ist es erforderlich, dass das Polymer in wässriger Lösung sauer reagierende Gruppen trägt, die der Polymer-Lösung einen pH-Wert im genannten Bereich verleihen, ohne dass dieser pH-Wert durch Zugabe einer weiteren Säure eingestellt werden muss.

Die Anwesenheit der Komponente c) macht das Korrosionsschutzmittel "härtbar", d.h. sorgt dafür, dass sich das Korrosionsschutzmittel auf der Metalloberfläche verfestigt. Dieses Verfestigen kann rein physikalisch durch Abdampfen von Wasser und/oder Lösungsmittel geschehen (was als "Verfilmen" bezeichnet werden kann). Vorzugsweise beruht das Härten jedoch zumindest teilweise auf einer chemischen Reaktion ("Vernetzung"), bei der sich die Molmasse des Polymers oder Copolymers c) erhöht. Beispiele solcher Reaktionen sind Polymerisierungsreaktionen, beispielsweise über C=C - Doppelbindungen, oder Kondensationsreaktionen. Diese Reaktionen können thermisch oder durch Einwirkung energiereicher Strahlung (z.B. Elektronenstrahlung, GammaStrahlung, UV- oder Lichtstrahlung) ausgelöst werden. Im Rahmen der vorliegenden Erfindung wird vorzugsweise ein thermisch und/oder durch Abdampfen von Wasser und/oder Lösungsmittel härtbares Polymer oder Copolymer als Komponente c) eingesetzt. Die Wärmezufuhr kann über einen Wärmeträger (wie beispielsweise das vorgewärmte Substrat oder heiße Luft) oder durch Infrarot-Strahlung erfolgen.

Das organische Polymer oder Copolymer c) enthält in einfacher Weise radikalisch polymerisierbare, ethylenisch ungesättigte Monomere.

Beispielsweise können folgende ethylenisch ungesättigte Monomere verwendet werden: vinylaromatische Monomere, wie Styrol und [alpha]-Methylstyrol, Ester aus vorzugsweise 3 bis 6C-Atome aufweisenden [alpha],[beta]-monoethylenisch ungesättigten Mono- und Dicarbonsäuren, wie insbesondere Acrylsäure, Meth¬acrylsäure, Maleinsäure, Fumarsäure und Itaconsäure, mit im allgemeinen 1 bis 12, vorzugsweise 1 bis 8 C-Atome aufweisenden Alkanolen, wie besonders Acrylsäure- und Methacrylsäuremethyl-, -ethyl-, -n-butyl-, -isobutyl-, pentyl-, - hexyl-, -heptyl-, -octyl-, -nonyl-, -decyl- und -2-ethylhexylester, Fumar- und Maleinsäuredimethylester oder -di-n-butylester.

Weiterhin können auch Monomere mit mehreren ethylenisch ungesättigten Doppelbindungen eingesetzt werden. Beispiele sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykol¬dimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat.

Das organische Polymer oder Copolymer c) enthält vorzugsweise mindestens ein Monomer ausgewählt aus Acrylsäure, Methacrylsäure, Acrylsäureester und Methacryl¬säureester und weist mindestens einen Typ von funktionellen Gruppen ausgewählt aus Epoxi-, Silan-, Hydroxy-, Carboxyl-, Phosphorsäure- und Phosphorsäureester-Gruppen auf.

Besonders bevorzugt ist es so aufgebaut, dass es mindestens zwei Monomere ausgewählt aus Acrylsäure, Methacrylsäure, Acrylsäureester und Methacrylsäureester enthält, wobei mindestens ein Monomer ausgewählt aus Acrylsäure¬ester und Methacrylsäureester eingebunden ist und wobei das Polymer mindestens einen Typ von funktionellen Gruppen ausgewählt aus Epoxi-, Silan-, Hydroxy-, Carboxyl-, Phosphorsäure- und Phosphorsäureester-Gruppen aufweist.

Dabei sind Polymere oder Copolymere bevorzugt, die Phosphorsäure- oder Phosphorsäureester-Gruppen tragen, wobei der Anteil an Monomeren, die Phosphorsäure- oder Phosphorsäureester-Gruppen tragen, im Polymer im insbesondere im Bereich von 0,5 bis 4, insbesondere vorzugsweise im Bereich von 1 bis 2 Mol-% liegt.

Zusätzlich zu den Phosphorsäure- oder Phosphorsäureester-Gruppen ist im Polymer oder Copolymer bevorzugt mindestens eine weitere Gruppe ausgewählt aus Epoxigruppen, Silangruppen, Carboxylgruppen und Hydroxygruppen vorhanden. Dabei kann der Gehalt an Hydroxygruppen im Polymer oder Copolymer 0,5 bis 3,5 mg / g Polymer betragen. Ein besonders bevorzugtes Polymer enthält Phosphorsäure- oder Phosphorsäureestergruppen, Carboxylgruppen und Hydroxygruppen.

Weiterhin ist es bevorzugt, dass das Polymer oder Copolymer außer Hydroxy-, Carboxyl-, Phosphorsäure- oder Phosphorsäureester-Gruppen zusätzlich Carbonsäureamid-Gruppen aufweist, wobei an das N-Atom der CarbonsäureamidGruppe mindestens ein Hydroxyalkyl-Rest, vorzugsweise mindestens ein Hydroxymethyl-Rest gebunden ist. Insbesondere sind Polymere bevorzugt, die Phosphorsäure- oder Phosphorsäureester-Gruppen und zusätzlich sowohl Hydroxy-Gruppen als auch Carboxyl-Gruppen als auch die genannten Carbonsäureamid-Gruppen aufweisen.

Beispiele für solche Monomere sind Methacrylsäure- und Acrylsäure-C1-C8-Hydroxyalkylester wie n-Hydroxyethyl-, n-Hydroxypropyl- oder n-Hydroxybutyl¬acrylat und -methacrylat sowie Verbindungen, wie N-Methylolacrylamid , Glycidylmethacrylat und Phosphorsäureester von Hydroxyacrylaten und Hydroxymethacrylaten.
Ein Zusatz von zur Bildung von Chelatkomplexen befähigten organischen Verbindungen f) ist vor allem dann empfehlenswert, wenn das Polymer c) keine Silangruppen aufweist.

Vorzugsweise enthält das Korrosionsschutzmittel Phosphationen als weitere Komponente e). Diese können in Form von Phosphorsäure und/oder in Form von deren Salzen eingebracht werden. Bei Einsatz von Phosphorsäure kann es erforderlich sein, den pH-Wert des Korrosionsschutzmittels durch Zugabe basischer Substanzen auf den gewünschten Bereich einzustellen. Dabei bietet es sich an, als basische Substanzen Oxide oder Carbonate der nachstehend genannten Metalle einzusetzen, sofern man die Anwesenheit der entsprechenden Metallionen wünscht. Unabhängig davon, in welcher Form man die Phosphationen einbringt, wird sich in dem Behandlungsmittel je nach dessen pH-Wert das entsprechende Gleichgewicht zwischen den unterschiedlich protolysierten Phosphationen-Spezies einstellen. Für die weiter unten folgenden quantitativen Angaben zur bevorzugten Zusammensetzung des Korrosionsschutzmittels wird vereinfachend angenommen, dass die Phosphationen in Form von Phoshorsäure vorliegen.

Weiterhin kann das erfindungsgemäße Korrosionsschutzmittel als zusätzliche Komponente f) Mangan- und/oder Magnesiumionen enthalten. Dabei wird die Anwesentheit von Manganionen bevorzugt. In diesem Fall können Magnesiumionen zusätzlich zu den Manganionen vorhanden sein, was sogar bevorzugt ist. Vorzugsweise bringt man diese Metallionen dadurch als Phosphate in das Korrosionsschutzmittel ein, dass man Oxide, Hydroxide oder Carbonate dieser Metalle mit Phosphorsäure umsetzt. Diese Oxide, Hydroxide oder Carbonate können also als basische Komponente dienen, um bei Anwesenheit von Phosphorsäure den pH-Wert auf den gewünschten Bereich einzustellen.

Weiterhin enthält das erfindungsgemäße Korrosionsschutzmittel vorzugsweise zusätzlich als Komponente g) mindestens eine zur Bildung von Chelatkomplexen befähigte organische Verbindung. Zur Bildung von Chelatkomplexen befähigte organische Verbindungen (Moleküle bzw. Ionen) sind beispielsweise Aminoalkylen-, insbesondere Aminomethylenphosphonsäuren, Phosphonocarbonsäuren, geminale Diphosphonsäuren und Phosphorsäureester sowie jeweils deren Salze. Ausgewählte Beispiele sind Phosphonobutantricarbonsäure, Aminotris(methylenphosphonsäure), Diethylentriaminpenta(methylenphosphonsäure), (2-hydroxiethyl)aminobis(methylenphosphonsäure), Ethylendiamintetrakis(methylenphos-phonsäure), Hexamethylendiamintetrakis(methylenphosphonsäure), (2-ethylhexyl)-aminobis(methylenphosphonsäure), n-Octylaminobis¬(methylenphosphonsäure), Cyclohexan-1,2-diamintetrakis(methylenphosphonsäure), Pentaethylenhexaminoktakis(methylenphosphonsäure), N,N-Bis(3-aminopropyl)aminohexakis(methylenphosphonsäure).

Weitere konkrete Beispiele sind in der Offenlegungsschrift DE 10 2006 039 633 im Paragraph [0014] genannt.

Weiterhin ist es bevorzugt, dass das Korrosionsschutzmittel als Komponente h) zusätzlich Molybdat- und/oder Wolframationen enthält. Vorzugsweise werden diese als Ammonium- oder Alkalisalze eingesetzt.

Weiterhin ist es bevorzugt, dass das Korrosionsschutzmittel zusätzlich als Komponente i) mindestens ein Kation ausgewählt aus Zink-, Cobalt-, Nickel-, Vanadium- und Eisenionen enthält. Hiermit sind im Korrosionsschutzmittel gelöste Ionen gemeint und nicht solche Ionen, die als austauschbare Kationen im Korrosionsschutzpigment b) gebunden sind. Wie auch die weiter oben genannten Mangan- und/oder Magnesiumionen werden auch diese Kationen vorzugsweise als Phosphate eingebracht. Dies kann wiederum dadurch geschehen, dass man Oxide, Hydroxide oder Carbonate dieser Ionen mit Phosphorsäure umsetzt. Insbesondere enthält das Korrosionsschutzmittel vorzugsweise Zinkionen.

Weiterhin ist es bevorzugt, dass das Korrosionsschutzmittel als zusätzliche Komponente j) mindestens ein Reduktionsmittel ausgewählt aus Eisen(II)-Ionen und Hydroxylamin, Hydroxylammonium-Salzen oder Hydroxylamin-abspaltenden Verbindungen enthält. Dies gilt insbesondere dann, wenn das Korrosionsschutzmittel Mangan(II)-Ionen enthält.

Definitionsgemäß enthält das Korrosionsschutzmittel mindestens die Komponente a), b), c) und d). Jede einzelne weitere der fakultativen Komponenten e) bis j) verbessert bestimmte Eigenschaften im Eigenschaftsprofil des erfindungsgemäßen Korrosionsschutzmittels. Daher ist es besonders bevorzugt, dass das Korrosionsschutzmittel mindestens eine, vorzugsweise mindestens 2 und insbesondere mindestens 3 der fakultativen Komponenten e) bis j) enthält. Beispielsweise ist es besonders bevorzugt, dass das Korrosionsschutzmittel sowohl Phosphationen als auch Mangan- und/oder Magnesiumionen enthält. Weiterhin ist es bevorzugt, dass das Korrosionsschutzmittel gleichzeitig Phosphationen und mindestens eine zur Bildung von Chelatkomplexen befähigte organische Verbindung enthält. In einer weiteren bevorzugten Ausführungsform enthält das Korrosionsschutzmittel Mangan- und/oder Magnesiumionen und zusätzlich mindestens ein Kation ausgewählt aus Zink-, Cobalt-, Nickel-, Vanadium- und Eisenionen. Sofern Mangan(II)-Ionen anwesend sind, enthält das Korrosionsschutzmittel vorzugsweise zusätzlich ein Reduktionsmittel i).

In einer weiteren bevorzugten Ausführungsform enthält das Korrosionsschutzmittel mindestens eine der Komponenten e), f), g) und i) zusammen mit Molybdat- und/oder Wolframationen.

Ein besonders bevorzugtes Korrosionsschutzmittel enthält mindestens einen Vertreter von jeder der Komponenten e), f), g), h) und i).

Zusätzlich kann das Korrosionsschutzmittel dispergierend wirkende Additive enthalten, wie sie beispielsweise zur Anreibung von Pigmentpasten zur Lackherstellung bekannt sind.

Vorzugsweise enthält das Korrosionsschutzmittel im anwendungsfertigen Zustand die Komponenten in folgenden Anteilen in Gew.-% bezogen auf das gesamte Korrosionsschutzmittel:
Wasser: 25 bis 69,6 Gew.-%,
   a) Fluorokomplexionen von Titan und/oder Zirkon, als Hexafluorotitan- bzw. Hexafluorozirkonsäure berechnet: insgesamt 0,3 bis 3 Gew.-%, vorzugsweise 0,5 bis 2 Gew.-%,
   b) Korrosionsschutzpigment(e): insgesamt 5 bis 25 Gew.-%, vorzugsweise insgesamt 10 bis 20 Gew.-%,
   c) im genannten pH-Bereich wasserlösliches oder wasserdispergierbares organisches Polymer, das als solches in wässriger Lösung bei einem Gehalt von 50 Gew.-% einen pH-Wert im Bereich von 1 bis 3 aufweist: 25 bis 50 Gew.-%, vorzugsweise 30 bis 40 Gew.-%,
   d) acylierte Polyvinylamine: insgesamt 0,1 bis 5 Gew.-%, vorzugsweise 0,5 bis 2 Gew.-%,
   e) Phosphationen, berechnet als Phosphorsäure: 0 bis 5 Gew.-%, vorzugsweise 0,5 bis 4 Gew.-%,
   f) Mangan- und/oder Magnesiumionen: insgesamt 0 bis 2 Gew.-%, vorzugsweise 0,1 bis 1 Gew.-%,
   g) zur Bildung von Chelatkomplexen befähigte organische Verbindung(en): insgesamt 0 bis 5 Gew.-%, vorzugsweise 0,5 bis 3 Gew.-%,
   h) Molybdat- und/oder Wolframationen, als Ammoniumsalz berechnet: insgesamt 0 bis 1 Gew.-%, vorzugsweise 0,05 bis 0,5 Gew.-%,
   i) Kationen ausgewählt aus Zink-, Cobalt-, Nickel-, Vanadium- und Eisenionen: insgesamt 0 bis 1 Gew.-%, vorzugsweise 0,1 bis 0,5 Gew.-%,
   j) Reduktionsmittel ausgewählt aus Eisen(II)-Ionen und Hydroxylamin, Hydroxylammonium-Salzen oder Hydroxylamin-abspaltenden Verbindungen: insgesamt 0 bis 0,1 Gew.-%, vorzugsweise 0,005 bis 0,05 Gew.-%.

Zusätzlich zu diesen Komponenten können weitere Wirk- oder Hilfsstoffe vorhanden sein, beispielsweise die weiter oben genannten zusätzlichen Polymere und/oder dispergierend wirkende Additive. Selbstverständlich sind die Anteile der einzelnen Komponenten so zu wählen, dass sie sich zu 100 % addieren. Dies gilt auch, wenn außer den genannten Komponenten a) bis j) weitere Komponenten vorhanden sind. In einer bevorzugten Ausführungsform enthält das Korrosionsschutzmittel ausschließlich Wasser sowie die Komponenten a) bis d) und eine oder mehrere der Komponenten e) bis j), allenfalls ergänzt durch die vorstehend genannten zusätzlichen Polymere und Additive. Dabei ist zu beachten, dass zu den genannten ionischen Komponenten entsprechende Gegenionen vorhanden sein müssen. Beispielsweise werden die Molybdat- und/oder Wolframationen vorzugsweise als Ammonium- oder Alkalimetallsalze eingesetzt. Insgesamt ist es jedoch bevorzugt, dass das Korrosionsschutzmittel außer den als Anionen vorliegenden Fluorokomplexen a), den anionischen Gruppen im Korrosionsschutzpigment b) und in den Polymeren oder Copolymeren c) und d), den Phosphationen e) sowie ggf. den Anionen der zur Bildung von Chelatkomplexen befähigten organischen Verbindungen g) keine weiteren Anionen enthält. Diese Bedingung stellt sicher, dass nach Aufbringen und Aushärten des Korrosionsschutzmittels in der Beschichtung keine Salze verbleiben, die in Wasser leicht löslich sind und die die Korrosionsschutzwirkung schwächen.

Insbesondere soll das erfindungsgemäße Korrosionsschutzmittel möglichst wenig organische Verbindungen wie beispielsweise organische Lösungsmittel enthalten, die unter den Bedingungen des Einbrennens flüchtig sind und die als "volatile organic carbon, VOC" in die Umgebungsluft gelangen. Demgemäß ist es bevorzugt, dass das Korrosionsschutzmittel nicht mehr als 5 Gew.-%, vorzugsweise nicht mehr als 2 Gew.-% und insbesondere nicht mehr 0,5 Gew.-% an organischen Verbindungen enthält, die bei Atmosphärendruck einen Siedepunkt von unterhalb 150 °C bis max. 150 °C haben.

Aus Gründen der breiten Anwendbarkeit, der Produktionsgeschwindigkeit und des Energieverbrauchs ist es wünschenswert, das metallische Substrat mit dem aufgetragenen Korrosionsschutzmittel bei einer Temperatur von nicht mehr als 150 °C auszuhärten. Demnach weist das organische Polymer oder Copolymer c) vorzugsweise die Eigenschaft auf, dass es bei einer Temperatur von nicht mehr als 150 °C, vorzugsweise nicht mehr als 100 °C innerhalb von nicht mehr als 60 Sekunden, vorzugsweise nicht mehr als 30 Sekunden aushärtbar ist. Die genannten Temperaturen sind dabei die Substrattemperaturen des Metallsubstrats mit dem aufgetragenen Korrosionsschutzmittel.

In einem weiteren Aspekt betrifft die vorliegende Erfindung daher auch ein Verfahren zur Beschichtung von Metallband mit einem erfindungsgemäßen härtbaren Korrosionsschutzmittel vorzugsweise in einer solchen Nassfilmdicke auf ein laufendes Metallband, dass beim Aushärten durch Erwärmen des Metallbandes eine Schicht mit einer Dicke im Bereich von 0,5 bis 10 µm, vorzugsweise 1 bis 5 µm resultiert. Hierzu ist eine Bandtemperatur von maximal 150 °C, vorzugsweise von maximal 100 °C für eine Zeitdauer von maximal 60 Sekunden, vorzugsweise von maximal 30 Sekunden bevorzugt.

Nach dem Aushärten des erfindungsgemäßen Korrosionsschutzmittels auf dem metallischen Substrat liegt bereits eine gut anhaftende und vor Korrosion schützende Deckschicht vor, die insbesondere für die weitere Beschichtung mit organischen Lacksystemen aufgrund der oberflächlich gebundenen Polyvinylamine gemäß der Komponente d) des erfindungsgemäßen Mittels gut geeignet ist, insbesondere für Lacksysteme auf Basis von Polyurethanharzen und/oder auf Basis von von Isocyanaten und Diolen oder Polyolen.
Demgemäß umfasst das erfindungsgemäße Verfahren insbesondere auch die Aufbringung eines weiteren Beschichtungsmittels enthaltend ein organisches Bindemittelsystem auf Basis von Polyurethanharzen und/oder auf Basis von Isocyanaten und Diolen oder Polyolen auf ein ausgehärtetes erfindungsgemäßes Korrosionsschutzmittel und die Aushärtung des Beschichtungsmittels.
Das Aufbringen weiterer weitgehend organischer Deckschichten dient zunächst einem erhöhten Korrosionsschutz des metallischen Substrates aufgrund der erhöhten Barrierewirkung gegenüber aggressiven Verbindungen und Medien. Zusätzlich leisten Decklacke eine verbesserte Abriebsfestigkeit und dienen über die Beimischung von Pigmenten auch dekorativen Zwecken, wie etwa der optischen Abdeckung der metallischen Substratoberfläche oder der farbgebenden Lackierung. Voraussetzung für eine dauerhafte Stabilität der aus verschiedenen Beschichtungsmitteln aufgebauten Gesamtbeschichtung ist eine gute Haftung der ausgehärteten Beschichtungsmittel untereinander und an der Grenzfläche zum metallischen Substrat. Im erfindungsgemäßen Verfahren werden diese Eigenschaften und die Kompatibilität der organischen Deckschichten und Bindemittelsysteme untereinander erfüllt, wobei als Zweitbeschichtung auf dem ausgehärteten erfindungsgemäßen Korrosionsschutzmittel Bindemittelsysteme auf Basis von Polyurethanharzen und/oder auf Basis von Isocyanaten und Diolen oder Polyolen wie bereits erwähnt bevorzugt sind.

Das erfindungsgemäßen Verfahren zur Beschichtung metallischer Oberflächen kann vorzugsweise auf Metallbändern ausgewählt aus Bänder von Zink oder Zinklegierungen, Eisen oder Eisenlegierungen, Aluminium oder Aluminiumlegierungen, sowie aus Stahlbändern, die mit Zink oder Zinklegierungen oder mit Aluminium oder Aluminiumlegierungen beschichtet sind, angewendet werden. Insbesondere ist dabei die Erstbeschichtung von Bändern ausgewählt aus Zink oder Zinklegierungen sowie aus Stahlbändern, die mit Zink oder Zinklegierungen beschichtet sind, wegen der leicht besseren Haftung zum metallischen Substrat bevorzugt.

Zusätzlich umfasst die vorliegende Erfindung ein in einem erfindungsgemäßen Verfahren hergestelltes Metallband oder hieraus abgeteiltes Metallblech, das gegebenenfalls umgeformt sein kann. Bevorzugt ist dabei ein solches Metallband, das zusätzlich zur ausgehärteten Beschichtung mit einem erfindungsgemäßen Mittel eine ausgehärtete Zweitbeschichtung mit einem Beschichtungsmittel enthaltend ein Bindemittelsystem auf Basis von Polyurethanharzen und/oder auf Basis von Isocyanaten und Diolen oder Polyolen aufweist.

Ausführungsbeispiele:
Im Folgenden sind sowohl erfindungsgemäße härtbare Korrosionsschutzmittel beispielhaft aufgelistet, sowie deren Anwendung in erfindungsgemäßen Verfahren beschrieben, die eine Zweitbeschichtung mit einem Beschichtungsmittel enthaltend ein Bindemittelsystem auf Basis von Polyurethanharzen oder auf Basis von Isocyanaten und Diolen oder Polyolen vorsehen. Die Effizienz der Schichtsysteme wird im sogenannten Kochtest bezüglich ihrer Haftungseigenschaften demonstriert und vergleichbaren Schichtsystemen aus dem Stand der Technik gegenüber gestellt.

| Tabelle 1 | | |
|---|---|---|
| Wässrige Grundzusammensetzung aller Beispielrezepturen | | |
| | | |
| Komponente* | Bezeichnung | Menge / Gew.-% ^{#} |
| - | H₃PO₄ | 2,7 |
| a) | H₂TiF₆ | 1,0 |
| b1) | ZnO | 0,5 |
| b2) | Calcium-modifiziertes Silika | 15,9 |
| c) | Acrylatharz | 35,0 |
| g) | Hydroxyethan-1,1-diphosphonsäure | 0,5 |
| * gemäß Nomenklatur der Komponenten in der Beschreibung | | |
| # Der von der Summe der Gewichtsanteile der Komponenten zu 100 Gew.-% verbleibende Anteil ist Wasser | | |

Die Tabelle 1 gibt eine Grundzusammensetzung nach der Art der in der DE 10 2006 039 633 offenbarten wässrigen Korrosionsschutzmittel an. Erfindungsgemäße Mittel werden hieraus durch Zugabe entsprechender Mengen an teilweise formylierten Polyvinylaminen bereitgestellt.

| Tabelle 2 | | | | |
|---|---|---|---|---|
| Beispielrezepturen für die Erstbeschichtung sowie Ergebnisse zur Lackhaftung nach Aufbringung einer Zweitbeschichtung auf Basis eines Polyurethanharzes | | | | |
| | | | | |
| Beispiel | | Zusatz * / Mᵣ in g mol⁻¹ | Koch-Test ^{#} | |
| | | | 6 mm | 8 mm |
| V1 | | - | 3 | 3 |
| V2 | | Polyethylenimin / 800 | 2 | 3 |
| V3 | | Polyvinylalkohol, ca. 10.000 Acetylierungsgrad 13 % | 2 | 2 |
| B1 | | Poly(N-formyl-vinylamin) / 340.000 Formylierungsgrad 100 % | 0 | 1 |
| V4 | | Poly(N-formyl-vinylamin) / 10.000 Formylierungsgrad 100 % | 2 | 3 |
| B2 | | Poly(N-formyl-vinylamin) / 340.000 Formylierungsgrad 90 % | 0 | 0 |
| V5 | | Poly(N-formyl-vinylamin) / 340.000 Formylierungsgrad 70 % | 1 | 2 |
| V6 | | Poly(N-formyl-vinylamin) / 340.000 Formylierungsgrad <10 % | 2 | 3 |
| V7 | | Poly(N-formyl-vinylamin) / 10.000 Formylierungsgrad <10 % | 2 | 3 |
| * | Anteil des polymeren Zusatzes in der Beispielrezeptur beträgt 5 Gew.-% an der Gesamtzusammensetzung des Korrosionsschutzmittels auf der Basis der Grundzusammensetzung der Tabelle 1 | | | |
| # | Eintauchen des Probebleches für 1 h in kochendes VE-Wasser und Beurteilung der Delamination am Gitterschnitt über Erichsenvertiefung (6 bzw. 8 mm) auf einer Skala von 0-3 | | | |
| | 0: keine Delamination | | | |
| | 1: kaum Delamination | | | |
| | 2: deutliche Delamination | | | |
| | 3: vollständige Delamination | | | |

Die Tabelle 2 enthält eine Übersicht über die bezüglich der Lackhaftung getesteten Zusammensetzungen gemäß Tabelle 1 mit einem 5 Gew.-% Anteil an verschiedenen polymeren Zusätzen.

Es wurden verzinkte Stahlbleche (HDG, "hot dip galvanised") zunächst mit einem alkalischen Reiniger (Ridoline ^{®} 1340, Henkel AG & Co. KGaA) entfettet, anschließend mit VE-Wasser (κ < 1 µScm⁻¹) gespült und mit dem Korrosionsschutzmittel der Tabelle 1 enthaltend die jeweiligen polymeren Zusätze entsprechend der Tabelle 2 mit dem Rakel in einer definierter Nassfilmdicke von 5 µm aufgetragen und bei einer Temperatur von 70°C für 5 min getrocknet. Nach dem Trocknen des Korrosionsschutzmittels wurde ein Lacksystem auf Polyurethanbasis (PE Outdoor BeckryPol, Becker Industrielack GmbH) in einer Nassfilmdicke von ca. 30 µm auf das erstbeschichtete Metallband aufgebracht und bei einer Bandtemperatur von 232 °C ausgehärtet.

Es zeigt sich, dass insbesondere diejenigen Korrosionsschutzmittel im sogenannten "Koch-Test" hervorragend geeignet sind, die Haftung zum organischen Decklack auf Basis eines Polyurethanharzes gegenüber der Basisrezeptur V1 zu verbessern, die als polymeren Zusatz Polyvinylamine mit hoher Molmasse und hohem Acylierungsgrad (B1, B2) enthalten.

## Patentansprüche

1. Chromfreies, härtbares Korrosionsschutzmittel zur Erstbeschichtung von metallischen Substraten, das einen pH-Wert im Bereich von 1 bis 3 aufweist, enthaltend Wasser und
a) Fluorokomplexionen von Titan und/oder Zirkon,
b) mindestens ein Korrosionsschutzpigment,
c) mindestens ein im genannten pH-Bereich wasserlösliches oder wasserdispergierbares organisches Polymer oder Copolymer, das als solches in wässriger Lösung bei einer Konzentration von 50 Gew.-% einen pH-Wert im Bereich von 1 bis 3 aufweist,
**dadurch gekennzeichnet, dass** das Mittel zusätzlich
d) mindestens ein Polyvinylamin mit einem Molekulargewicht größer als 100.000 g/mol, aber nicht größer als 1.000.000 g/mol enthält, wobei der Acylierungsgrad der Polyvinylamine in Form formylierter und acetylierter Amino-Gruppen nicht kleiner als 80 % ist.

2. Mittel gemäß Anspruch 1, **dadurch gekennzeichnet, dass** die Amino-Gruppen der Polyvinylamine der Komponente d) formyliert vorliegen.

3. Mittel gemäß Anspruch 2, **dadurch gekennzeichnet, dass** das Molekulargewicht der Polyvinylamine der Komponente d) nicht größer als 500.000 g/mol ist.

4. Mittel gemäß einem oder mehreren der vorherigen Ansprüche, **dadurch gekennzeichnet, dass** der Acylierungsgrad der Polyvinylamine der Komponente d) nicht kleiner als 90 % ist.

5. Mittel gemäß einem oder mehreren der vorherigen Ansprüche, **dadurch gekennzeichnet, dass** die wasserlöslichen oder wasserdispergierbaren organischen Polymere oder Copolymere der Komponente c) aus einem oder mehreren der Monomere Acrylsäure, Methacrylsäure, Acrylsäureester und Methacrylsäureester aufgebaut sind und mindestens einen Typ von funktionellen Gruppen ausgewählt aus Epoxi-, Silan-, Hydroxy-, Carboxyl-, Phosphorsäure- und Phosphorsäureester-Gruppen aufweisen.

6. Mittel gemäß Anspruch 5, **dadurch gekennzeichnet, dass** die wasserlöslichen oder wasserdispergierbaren organischen Polymere oder Copolymere der Komponente c) mindestens ein Monomer ausgewählt aus Acrylsäureester und Methacrylsäureester enthalten.

7. Mittel gemäß einem oder beiden der vorherigen Ansprüche 5 und 6, **dadurch gekennzeichnet, dass** der Anteil an Monomeren, die Phosphorsäure- oder Phosphorsäureester-Gruppen tragen, im Polymer oder Copolymere der Komponente c) im Bereich von 0,5 bis 4, vorzugsweise im Bereich von 1 bis 2 Mol-% liegt.

8. Mittel gemäß einem oder mehreren der vorherigen Ansprüche, **dadurch gekennzeichnet, dass** es nicht mehr als 5 Gew.-%, vorzugsweise nicht mehr als 2 Gew.-% und insbesondere nicht mehr als 0,5 Gew.-% an organischen Verbindungen enthält, die bei Atmosphärendruck einen Siedepunkt von höchstens 150 °C haben.

9. Verfahren zur Beschichtung von Metallband, **dadurch gekennzeichnet, dass** man ein Korrosionsschutzmittel nach einem oder mehreren der Ansprüche 1 bis 8 mit dem entfetteten und gereinigten Metallband in Kontakt bringt, so dass nach dem Aushärten des Korrosionsschutzmittels auf dem Metallband eine Schichtdicke im Bereich von 0,5 bis 10 µm, vorzugsweise 1 bis 5 µm resultiert.

10. Verfahren nach Anspruch 9, **dadurch gekennzeichnet, dass** nach dem Aushärten des Korrosionsschutzmittels ein weiteres Beschichtungsmittel enthaltend ein organisches Bindemittelsystem auf Basis von Polyurethanharzen und/oder auf Basis von Isocyanaten und Diolen oder Polyolen aufgebracht und ausgehärtet wird.

11. Verfahren nach einem oder beiden der Ansprüche 9 und 10, **dadurch gekennzeichnet, dass** das Metallband ausgewählt ist aus Bänder von Zink oder Zinklegierungen, Eisen oder Eisenlegierungen, Aluminium oder Aluminiumlegierungen, sowie aus Stahlbändern, die mit Zink oder Zinklegierungen oder mit Aluminium oder Aluminiumlegierungen beschichtet sind.

12. Beschichtetes Metallband oder hieraus abgeteiltes Metallblech, das gegebenenfalls umgeformt sein kann, **dadurch gekennzeichnet, dass** es eine Beschichtung aufweist, die nach einem oder mehreren der Ansprüche 9 bis 11 hergestellt ist.

## Claims

1. A chromium-free, hardenable anti-corrosion agent for the initial coating of metal substrates, having a pH in the range of 1 to 3, containing water and
a) flouro complexes of titanium and/or zircon,
b) at least one anti-corrosion pigment,
c) at least one organic polymer or copolymer that is water-soluble or water-dispersible in the stated pH range and that has a pH in the range of 1 to 3 when in an aqueous solution at a concentration of 50% by weight,
**characterized in that** the agent additionally contains
d) at least one polyvinylamine having a molecular weight of greater than 100,000 g/mol but no greater than 1,000,000 g/mol, the acylation rate of the polyvinylamine in the form of formylated and acylated amino groups being no less than 80%.

2. The agent according to claim 1, **characterized in that** the amino groups of the polyvinylamine of component d) are present in formylated form.

3. The agent according to claim 2, **characterized in that** the molecular weight of the polyvinylamine of component d) is no greater than 500,000 g/mol.

4. The agent according to one or more of the preceding claims, **characterized in that** the acylation rate of the polyvinylamine of component d) is no less than 90%.

5. The agent according to one or more of the preceding claims, **characterized in that** the water-soluble or water-dispersible organic polymers or copolymers of component c) are composed of one or more of the monomers acrylic acid, methacrylic acid, acrylic acid ester and methacrylic acid ester, and comprise at least one type of functional group selected from epoxy, silane, hydroxy, carboxyl, phosphoric acid and phosphoric acid ester groups.

6. The agent according to claim 5, **characterized in that** the water-soluble or water-dispersible organic polymers or copolymers of component c) contain at least one monomer selected from acrylic acid ester and methacrylic acid ester.

7. The agent according to one or both of the preceding claims 5 and 6, **characterized in that** the proportion of monomers that carry phosphoric acid groups or phosphoric acid ester groups in the polymer or copolymers of component c) is in the range of 0.5 to 4, preferably in the range of 1 to 2 mol.%.

8. The agent according to one or more of the preceding claims, **characterized in that** it contains no more than 5% by weight, preferably no more than 2% by weight, and in particular no more than 0.5% by weight of organic compounds having a boiling point of at most 150°C at atmospheric pressure.

9. Method for coating metal strip, **characterized in that** an anti-corrosion agent according to one or more of claims 1 to 8 is brought into contact with the degreased and cleaned metal strip so that, after the anti-corrosion agent has hardened on the metal strip, a layer thickness in the range of 0.5 to 10 µm, preferably 1 to 5 µm results.

10. The method according to claim 9, **characterized in that**, after the anti-corrosion agent has hardened, a further coating agent containing an organic binder system based on polyurethane resins and/or based on isocyanates and diols or polyols is applied and hardened.

11. The method according to one or both of claims 9 and 10, **characterized in that** the metal strip is selected from strips of zinc or zinc alloys, iron or iron alloys, aluminum or aluminum alloys, and from steel strips that are coated with zinc or zinc alloys or with aluminum or aluminum alloys.

12. Coated metal strip or metal sheet separated therefrom that can optionally be shaped, **characterized in that** it comprises a coating that is produced according to one or more of claims 9 to 11.

## Revendications

1. Agent anticorrosion exempt de chrome pour le revêtement primaire de substrats métalliques, dont la valeur de pH est dans la gamme allant de 1 à 3 et qui contient de l'eau et
a) des fluoro-complexes de titane et/ou de zirconium.
b) au moins un pigment anticorrosion,
c) au moins un polymère ou copolymère organique soluble dans l'eau ou dispersible dans l'eau dans ladite gamme de pH qui a en tant que tel dans une solution aqueuse à une concentration de 50% en poids un pH dans la gamme allant de 1 à 3,
**caractérisé en ce que** l'agent contient en outre
d) au moins une polyvinylamine de poids moléculaire supérieur à 100000 g/mole, mais non supérieur à 1000000 g/mol, le degré d'acylation des polyvinylamines sous la forme de groupes amino formylés et acétylés n'étant pas inférieur à 80%.

2. Agent selon la revendication 1, **caractérisé en ce que** les groupes amino des polyvinylamines du composant d) sont présents sous forme formylée.

3. Agent selon la revendication 2, **caractérisé en ce que** le poids moléculaire des polyvinylamines du composant d) est non supérieur à 500000 g/mol.

4. Agent selon l'une ou plusieurs des revendications précédentes, **caractérisé en ce que** l'acylation des polyvinylamines du composant d) est non inférieure à 90%.

5. Agent selon l'une ou plusieurs des revendications précédentes, **caractérisé en ce que** les polymères ou copolymères organiques, solubles dans l'eau ou dispersibles ou dans l'eau, du composant c) sont obtenus à partir d'un ou de plusieurs des monomères acide acrylique, acide méthacrylique, esters d'acide acrylique et esters d'acide méthacryliques et comportent au moins un type de groupes fonctionnels choisis parmi les groupes époxy, silane, hydroxy, carboxyl, acide phosphorique et ester d'acide phosphorique.

6. Agent selon la revendication 5, **caractérisé en ce que** les polymères ou copolymères organiques, solubles dans l'eau ou dispersibles dans l'eau, du composant c) contiennent au moins un monomère choisi parmi les esters de l'acide acrylique et les esters de l'acide méthacrylique.

7. Agent selon l'une ou l'autre des revendications 5 et 6, **caractérisé en ce que** la proportion de monomères, qui portent des groupes acide phosphorique ou ester d'acide phosphorique, dans le polymère ou des copolymères du composant c) est dans la gamme de 0,5 à 4%, de préférence dans la gamme de 1 à 2% en moles.

8. Agent selon l'une ou plusieurs des revendications précédentes, **caractérisé en ce qu'**il ne contient pas plus de 5% en poids, de préférence pas plus de 2% en poids, et en particulier pas plus de 0,5% en poids, de composés organiques qui ont un point d'ébullition supérieur à 150°C à la pression atmosphérique.

9. Procédé de revêtement de bande métallique, **caractérisé en ce qu'**on met un agent anticorrosion selon l'une ou plusieurs des revendications 1 à 8 en contact avec la bande métallique dégraissé et nettoyé de sorte qu'après le durcissement de l'agent anticorrosion il résulte sur la bande métallique une épaisseur de couche dans la gamme de 0,5 à 10 µm, de préférence de 1 à 5 µm.

10. Procédé selon la revendication 9, **caractérisé en ce qu'**après le durcissement de l'agent anticorrosion, un autre agent de revêtement est appliqué et durci, qui contient un système de liant organique à base de résines de polyuréthanne et/ou à base d'isocyanates et de diols ou de polyols.

11. Procédé selon l'une des revendications 9 et 10 ou les deux, **caractérisé en ce que** la bande métallique est choisi parmi des bandes en zinc ou en alliages de zinc, en fer ou en alliages de fer, en aluminium ou en alliages d'aluminium, ainsi que des bandes en acier qui sont revêtues de zinc ou d'alliages de zinc ou d'aluminium ou d'alliages d'aluminium.

12. Bande métallique revêtue ou tôle métallique découpée dans une telle bande, qui peut éventuellement être mise en forme, **caractérisée en ce qu'**elle comporte un revêtement qui est préparé conformément à l'une ou plusieurs des revendications 9 à 11.
